# EUROPEAN PATENT APPLICATION

(11) **EP 2 039 711 A1**
(43) Date of publication of application: **25.03.2009**
(21) Application number: 08015806.6
(22) Date of filing: 09.09.2008
(51) Int. Cl.: C08G 18/36, C08G 18/48

(54) **Storage-stable polyol blends containing N-pentane**

(30) Priority: 21.09.2007 US 903284
(71) Applicant: Bayer MaterialScience LLC, Pittsburgh, PA 15205 (US)
(72) Inventor: Schilling, Steven Lyle, Pittsburgh, PA 15228 (US)
(74) Representative: Marx, Thiemo Patrick

(57) **Abstract**

A storage stable polyol composition composed of at least 25% by weight of a polyol derived from a natural oil and a blowing agent composition which includes greater than 50% by weight of n-pentane.

## Description

### Field of the Invention

The present invention relates to polyol compositions useful for the production of polyurethane foams which compositions include (a) a polyol, of which at least 25% by weight is derived from a natural oil and (b) n-pentane. These polyol compositions are storage stable (i.e., do not separate for a period of at least 90 days)

### Background of the Invention

Over the past decade there has been growing interest in Natural Oil Polyols (NOPs) and their use as raw materials in the manufacture of polyurethanes. The use of NOPs, which are based at least in part on renewable vegetable oils, is expected to increase because these polyols are seen as being more desirable than petroleum-based materials. However, the NOPs that have been available until now have some drawbacks that limit their usefulness. Most of the commercially available NOPs have relatively low hydroxyl functionalities and relatively high equivalent weights, which make them most suited for use in solid polyurethanes and flexible foams. Since most of these polyols are largely based on fatty acid triglycerides, the NOPs may have very different solubility characteristics than conventional polyether and polyester polyols. The fatty acid portion of these NOPs may increase their solubility with hydrocarbon blowing agents such as cyclopentane, isopentane, and n-pentane, but at the same time may limit their compatibility with conventional polyols. Other commercially available NOPs may have good solubility with conventional polyols, but not with hydrocarbon blowing agents.

Natural Oil Polyols (NOPs) are polyols that are produced from renewable raw materials such as soybean or castor oil that are derived from agriculture. This is in contrast to petrochemicals which are fossil-based and therefore non-renewable. NOPs are of interest because increasingly end-users in some markets wish to produce articles that are environmentally friendly. One approach to satisfy this desire is by increasing the renewable or biobased content of the articles, thereby reducing their petrochemical content. Some markets where increasing the renewable content can be important are construction, automotive, and home furnishings.

Additionally, the U.S. Federal Procurement Process has provisions which may favor products which are biobased over those that are petroleum-based. For example, for wall construction, the U.S. Department of Agriculture (USDA) has proposed a minimum biobased content of 8% to be classified as a biobased product for federal procurement purposes. To help standardize the reporting of biobased content, the ASTM has published a briefing paper containing pertinent definitions along with examples for determining the biobased content of an article.

Because of these initiatives, many new biobased polyols are being promoted as a means to increase the renewable content in various products. Many examples of NOPs derived at least partially from vegetable oils and applied to polyurethane foam applications have been published.

Natural oils, however, are not the only source of biobased material that can be used to produce biobased polyols. Sucrose-based polyether polyols suitable for rigid foam applications have been available for many years, and these may contain up to about 30% renewable content. However, in making a rigid foam from these polyols, the overall renewable content of the foam drops to a relatively low level, which may fail to meet the proposed USDA guidelines. To maximize the biobased content of rigid foams, the biobased content of the polyol must be increased. By developing NOPs with renewable contents in the 40 to 70% range it should be possible to produce rigid foams with renewable contents of about 10 - 15% or more.

However, the use of NOPs in rigid foams is of interest only as long as the foam's performance is still acceptable. Depending on the intended applications, the performance attributes that are most important might include thermal insulating ability, mechanical properties or durability. For example, a primary function of many rigid foams is to insulate, thereby reducing energy usage. If the ability to insulate is adversely affected by the use of NOPs to make the foam, the overall result could be increased consumption of energy to compensate for the inferior insulating performance leading to increased petroleum usage. Likewise, if higher foam densities are needed to give the required properties, the overall result could be increased petrochemical usage, even while the biobased content is increased.

Polyols based on natural oils have been available for some time, but their use in rigid insulating foam has been limited. Many of the commercially available natural oil polyols have lower functionalities and higher equivalent weights than are normally used in the preparation of rigid foams. The lack of solubility of the available NOPs with blowing agents or other polyols can present difficulties in formulating. While the commercial NOPs typically have good solubility with either hydrocarbon blowing agents such as the pentanes or with conventional polyether and polyester polyols, they usually do not have good solubility with both conventional polyether or polyester polyols and hydrocarbon blowing agents.

For a material to be useful in the preparation of rigid polyurethane foams, it is often necessary for the resin blend, made up of the polyol, blowing agent and additives, to be phase stable. It may be possible to use components with limited solubility by adding them as a third stream just prior to foaming, but most manufacturers are not equipped to do this. Conventional polyols used in making rigid polyurethane foams are relatively hydrophilic and show reasonable solubility with water, with other polyols and with the halogen containing blowing agents such as HFC 245fa and HFC 134a. However, they often show only limited solubility with cyclopentane and even poorer solubility with normal pentane.

Of the pentanes, cyclopentane has the best solubility properties and the lowest vapor thermal conductivity of the pentane isomers. As a result, cyclopentane has been the most preferred of the pentane isomers for use as a foam blowing agent.

Cyclopentane is, however, more expensive than n-pentane. It would therefore be economically advantageous to develop a polyol composition in which n-pentane was used as the primary or only blowing agent.

### Summary of the Invention

It is an object of the present invention to provide phase stable polyol compositions that include a significant amount of at least one polyol derived from a natural oil and n-pentane.

It is another object of the present invention to provide phase stable polyol compositions containing a significant amount of polyol(s) derived from a natural oil and n-pentane as the blowing agent which are suitable for the production of polyurethane foams.

These and other objects which will be apparent to those skilled in the art are accomplished by the polyol compositions of the present invention which include at least 25% by weight, based on total weight of all polyols, of a polyol derived from a natural oil and a blowing agent composition which includes greater than 50% by weight, based on total weight of blowing agent, of n-pentane.

### Detailed Description of the Invention

Natural oil polyols have very different solubility characteristics than the conventional polyols used to produce polyurethane foams. Natural oils are largely hydrocarbon-like in nature. This hydrocarbon-like nature could make polyols derived from them more hydrophobic than conventional polyols. Although this increased hydrophobic nature could improve a natural oil polyol's compatibility with hydrocarbons, it could also reduce its compatibility with conventional polyols and water.

It has been found that certain types of polyols derived from natural oils are sufficiently compatible with hydrocarbon blowing agents, particularly, n-pentane, as well as conventional polyols and water that they will form stable compositions with these materials.

Except in the operating examples, or where otherwise indicated, all numbers expressing quantities, percentages, OH numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The stable polyol compositions of the present invention must include at least 2% by weight, preferably, at least 5% by weight, most preferably, at least 10% by weight, of n-pentane.

The stable polyol compositions of the present invention must include at least 25% by weight, based on total weight of all polyols, preferably, at least 35% by weight, most preferably, at least 50% by weight, of a polyol derived from a natural oil.

The natural oil-based polyols useful for the compositions of the present invention can be prepared with a wide range of functionalities and equivalent weights but they must have good solubility with both hydrocarbon blowing agents and conventional polyether and polyester polyols.

By varying the recipes for these polyols it is possible to obtain average functionalities that range from about 2 to a high of about 5 hydroxyl groups per molecule. While functionality is difficult to measure directly, it can often be estimated or calculated based on chemistry involved and a material balance of the manufacturing process. A wide range of equivalent weights is also possible. NOPs have been prepared with hydroxyl numbers ranging from about 200 to 400 mg KOH/g, which correspond to equivalent weights of about 140 to 280.

These NOP polyols tend to have viscosities similar to polyether polyols with equivalent functionalities and hydroxyl numbers.

Natural oil based polyols suitable for use in the polyol compositions of the present invention may be produced in a simple one-pot one-step process for the production of polyether-ester polyols obtained by reacting starter compounds having Zerewitinoff-active hydrogen atoms with alkylene oxides under base catalysis in the presence of fatty acid esters.

These polyether-ester polyols have a combination of the properties of low molecular weight polyols having a high density of OH groups and triglycerides, and the compatibility or miscibility of the two classes of substances with one another and with polyether polyols conventionally employed in polyurethane chemistry.

The triglycerides are incorporated completely into the polyether-ester polyols formed. These polyether-ester polyols have OH numbers in the range of from 28 to 700 mg KOH/g.

Suitable starter compounds having Zerewitinoff-active hydrogen atoms usually have functionalities of from 2 to 8, but in certain cases also functionalities of up to 35. Their molar masses are from 62 g/mol to 1,200 g/mol. In addition to hydroxy-functional starter compounds, aminofunctional starter compounds can also be employed. Preferred starter compounds have functionalities of greater than or equal to 2. Examples of hydroxy-functional starter compounds are propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, trimethylolethane, triethanolamine, pentaerythritol, sorbitol, sucrose, α - methyl glucoside, fructose, hydroquinone, pyrocatechol, resorcinol, bisphenol F, bisphenol A, 1,3,5-trihydroxybenzene, condensates of formaldehyde and phenol or melamine or urea containing methylol groups, and Mannich bases. Highly functional starter compounds based on hydrogenated starch hydrolysis products can also be employed. Such compounds are described, for example, in EP-A 1 525 244. Examples of starter compounds containing amino groups are ammonia, ethanolamine, diethanolamine, isopropanolamine, diisopropanolamine, ethylenediamine, hexamethylenediamine, aniline, the isomers of toluidine, the isomers of diaminotoluene, the isomers of diaminodiphenylmethane and products having a relatively high ring content obtained in the condensation of aniline with formaldehyde to give diaminodiphenylmethane. Ring-opening products from cyclic carboxylic acid anhydrides and polyols can moreover also be employed as starter compounds. Examples are ring-opening products from phthalic anhydride, succinic anhydride and maleic anhydride on the one hand and ethylene glycol, diethylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, pentaerythritol or sorbitol on the other hand. Mixtures of various starter compounds can of course also be employed.

Prefabricated alkylene oxide addition products of the starter compounds mentioned, that is to say polyether polyols having OH numbers of from 6 to 800 mg KOH/g, can also be added to the process. It is also possible also to employ polyester polyols having OH numbers in the range of from 6 to 800 mg KOH/g in the process according to the invention, alongside the starter compounds. Polyester polyols which are suitable for this can be prepared, for example, from organic dicarboxylic acids having 2 to 12 carbon atoms and polyhydric alcohols, preferably diols, having 2 to 12 carbon atoms, preferably 2 to 6 carbon atoms.

Suitable alkylene oxides are, for example, ethylene oxide, propylene oxide, 1,2-butylene oxide or 2,3-butylene oxide and styrene oxide. Preferably, propylene oxide and ethylene oxide are added to the reaction mixture individually, in a mixture or successively. If the alkylene oxides are metered in successively, the products prepared contain polyether chains having block structures. Products with ethylene oxide end blocks are characterized, for example, by increased concentrations of primary end groups which impart to the systems increased reactivity with isocyanates.

The generic term "fatty acid esters" in the following describes fatty acid glycerides, in particular fatty acid triglycerides, and/or fatty acid esters based on other mono- and polyfunctional alcohols. The fatty acid radicals of the fatty acid esters can, as in the case of castor oil, carry hydroxyl groups. Fatty acid esters, the fatty acid radicals of which have been modified subsequently with hydroxyl groups, can also be used. Fatty acid radicals modified in this way can be obtained, for example, by epoxidation of the olefinic double bonds and subsequent ring-opening of the oxirane rings by means of nucleophiles or by hydroformylation / hydrogenation. Unsaturated oils are often also treated with atmospheric oxygen at elevated temperature for this purpose.

All triglycerides are suitable as starting materials for the natural oil based polyols useful in the polyol compositions of the present invention. Specific examples of suitable starting materials include: cottonseed oil, groundnut oil, coconut oil, linseed oil, palm kernel oil, olive oil, maize oil, palm oil, castor oil, lesquerella oil, rapeseed oil, soybean oil, sunflower oil, herring oil, sardine oil, tallow and lard. Fatty acid esters of other mono- or polyfunctional alcohols and fatty acid glycerides having less than 3 fatty acid radicals per glycerol molecule are also suitable. The fatty acid (tri)glycerides and the fatty acid esters of other mono- and polyfunctional alcohols are also suitable.

The advantage of the above-described process is its capability of converting fatty acid esters without OH groups in the fatty acid radicals (e.g., fatty acid esters based on lauric myristic, palmitic, stearic, palmitoleic, oleic, erucic, linoleic, linolenic elaeostearic or arachidonic acid or mixtures thereof) into suitable polyether-esters.

The fatty acid esters employed in the preparation of the polyether-ester polyols may be used in amounts of from 5 to 85 wt.%, preferably 20 to 60 wt.%, based on the amount of end product.

Catalysts suitable for producing a natural oil based polyol include: alkali metal or alkaline earth metal hydroxides (preferably potassium hydroxide), polymeric alkoxylates, amine or a carboxylic acid salts of alkali metals or alkaline earth metals.

In the preferred one-pot process, the low molecular weight starter compounds, catalyst(s) and fatty acid esters are initially introduced into the reactor and are reacted with alkylene oxide(s) under an inert gas atmosphere at temperatures of 80-170 °C. The alkylene oxide(s) are fed continuously to the reactor. Such reactions are conventionally carried out in the pressure range of from 10 mbar to 10 bar. After the end of the alkylene oxide metering phase, an after-reaction phase conventionally follows, in which residual alkylene oxide reacts. The end of the after-reaction phase is reached when no further drop in pressure can be detected in the reaction tank.

Working up of the polyether-ester polyols may be carried out by any of the conventional methods, e.g., by neutralization of the alkoxylate end groups with approximately stoichiometric amounts of strong dilute mineral acids such as sulfuric acid or with an organic carboxylic acid such as lactic acid.

The polyol compositions of the present invention composed of natural oil based polyol(s) plus n-pentane may be used as starting components for the production of polyurethane foams. More specifically the polyol compositions of the present invention may be mixed with other isocyanate-reactive components and then reacted with one or more organic polyisocyanates, optionally in the presence of one or more blowing agents in addition to n-pentane, in the presence of one or more catalysts and optionally in the presence of other additives, such as cell stabilizers.

Any of the known polyether polyols, polyester polyols, polycarbonate polyols, polyether-carbonate polyols, polyester-carbonate polyols, polyether-ester-carbonate polyols and/or low molecular weight chain-lengthening and/or crosslinking agents having hydroxyl numbers or amine numbers of from 6 to 1,870 mg KOH/g can optionally be admixed with the polyol compositions of the present invention as further isocyanate-reactive components.

Any of the known chain-lengthening and crosslinking agents and mixtures of chain-lengthening and crosslinking agents may be used to produce polyurethane foams from the polyol compositions of the present invention.

Any of the known organic polyisocyanates, e.g., the cycloaliphatic, araliphatic, aromatic and heterocyclic polyisocyanates described by W. Siefken in Justus Liebigs Annalen der Chemie, 562, pages 75 to 136, represented by the formula Q(NCO)ₙ are suitable for producing polyurethane foams from the polyol compositions of the present invention. Prepolymers produced from these polyisocyanates are also suitable.

In addition to n-pentane included in the polyol composition of the present invention, other known blowing agents may also be included in the polyurethane-forming reaction mixture. When such additional blowing agent(s) is/are employed, they should be used in an amount which is less than 50% by weight, based on the total amount of blowing agent. Where water is used as the additional blowing agent, the water should be used in an amount which is preferably less than 35% by weight, most preferably, less than 20% by weight, of the total amount of blowing agent present in the polyurethane-forming reaction mixture. Polyol compositions containing 5-20% by weight n-pentane and 1-4% by weight water are particularly preferred.

Examples of blowing agents which can be used in combination with the n-pentane present in the stable polyol composition of the present invention, include: isopentane, cyclopentane, water, gases or readily volatile inorganic or organic substances which vaporize under the influence of the exothermic polyaddition reaction and advantageously have a boiling point under normal pressure in the range of from -40 to 120°C, preferably from 10 to 90°C, as physical blowing agents. Organic blowing agents which can be used are e.g. acetone, ethyl acetate, methyl acetate, diethyl ether, halogen-substituted alkanes, such as HFCs, such as HFC134a, HFC-245fa and HFC-365mfc, and furthermore unsubstituted alkanes, such as the other isomers of pentane, butane, hexane, or heptane. Possible inorganic blowing agents are e.g. air, CO₂ or N₂O. A blowing action can also be achieved by addition of compounds which decompose at temperatures above room temperature with gases being split off, for example nitrogen and/or carbon dioxide, such as azo compounds, e.g. azodicarboxamide or azoisobutyric acid nitrile, or salts, such as ammonium bicarbonate, ammonium carbamate or ammonium salts of organic carboxylic acids, e.g. the monoammonium salts of malonic acid, boric acid, formic acid or acetic acid.

Any of the known catalysts for the polyurethane-forming reaction may be used to produce polyurethane foams from the stable polyol compositions of the present invention. Examples of suitable catalysts include amine catalysts such as tertiary amines, Mannich bases, sila-amines having carbon-silicon bonds, nitrogen-containing bases, lactams and azalactams, organometallic compounds, and sulfur-containing compounds.

Additives which can optionally be used to prepare polyurethane foams from the stable polyol compositions of the present include: surface-active additives, such as emulsifiers, foam stabilizers, cell regulators, flameproofing agents, nucleating agents, antioxidants, stabilizers, lubricants and mold release agents, dyestuffs, dispersing aids and pigments.

Polyurethane foams can be prepared from the polyol compositions of the present invention by any of the known processes described in the literature, e.g. the one-shot or the prepolymer process.

Having thus described the present invention, the following examples are given as being illustrative thereof.

### EXAMPLES

The materials used to prepare polyols derived from a natural oil which are suitable for use in the polyol compositions of the present invention were:

| | |
|---|---|
| SOYBEAN OIL: | A commercially available soybean oil which has been refined, bleached and de-odorized. |
| GLY STARTER: | Propoxylated glycerine which as been dewatered, but which has not had the KOH catalyst neutralized or removed which was prepared by Procedure A. |
| IRGANOX: | Octadecyl 3-(3,5-di-tert-butyl-4-hydroxyphenyl)-propionate, an antioxidant available from Ciba. |

### Procedure A:

77.7 kg of glycerine and 2.44 kg of aqueous potassium hydroxide (45%) were charged at room temperature to an 80-gallon stainless steel pressure-rated alkoxylation reactor. This reactor was then purged with nitrogen, closed, and heated to 110°C. Steady and thorough stirring of the liquid phase was applied, and vacuum was applied to the vapor space. Water vapor was condensed external to the reactor and the vacuum was only discontinued after a period of one to two hours when the rate of water being condensed had greatly diminished. Vacuum was discontinued and the reactor was sealed in preparation to feed propylene oxide.

Propylene oxide was then gradually fed to the reactor while the temperature of the liquid phase was maintained at 105° C. The total amount of propylene oxide (PO) fed to the reactor was 61.2 kg. The PO was post-reacted completely by monitoring the pressure profile at isothermal conditions. The product was cooled under nitrogen blanket. The result was a low molecular weigh propoxylated glycerine polyol with a hydroxyl number of 1020 mg KOH/gm, and a alkalinity of 0.80% KOH as determined by titration.

### Example 1

1716 grams of GLY STARTER, 1423 grams of sucrose and 3363 grams of SOYBEAN OIL were charged at room temperature to a stainless steel pressure-rated alkoxylation reactor under a "nitrogen sweep" through the vapor space. The reactor was closed and pressurized to 1 bar, gage with nitrogen followed by the release of the pressure. This pressurization process was repeated two additional times to ensure that the reactor was air-free.

The reactor contents were then heated to 105°C.

Propylene oxide (PO) was then gradually fed to the reactor while the temperature of the liquid phase was maintained at 105° C. An amount of 2527 grams of propylene oxide was fed into the reactor over a period of 287 minutes.

Post-reaction of the mixture at 105°C was continued until the pressure had decreased to a stable value indicating that all of the PO had reacted. The reaction mixture was then cooled to 90°C and lactic acid was added to neutralize the residual alkalinity. This neutralized mixture was then heated back up to 110°C and vacuum was applied to the vapor space of the reactor to remove water vapor. An amount of an anti-oxidant compound "Irganox 1076" corresponding to 500 ppm in the product was then added. This mixture was then mixed thoroughly and then cooled before discharge of the product from the reactor.

The polyether product was a clear liquid with a uniform appearance. The renewables content of this polyether (consisting of glycerine, sucrose, and soybean oil) was determined by calculation to be 63%.

The properties of this polyether product determined by analysis were:

| | |
|---|---|
| Hydroxyl Number, (mg KOH/gm) | 391.9 |
| Acid Number, (mg KOH/gm) | 0.008 |
| Water, wt % | 0.023 |
| Color, Gardner | 2 |
| pH (9/1 methanol / water) | 8.3 |
| Viscosity at 25C, mPa-sec | 2588 |

By theoretical calculation, the mean hydroxyl functionality of this polyether was determined to be 3.5.

### Example 2

45.2 kg of GLY STARTER and 99.8 kg of SOYBEAN OIL were charged at room temperature to an 80-gallon stainless steel pressure-rated pilot plant alkoxylation reactor under a "nitrogen sweep" through the vapor space.

The reactor was then closed and pressurized to 1 bar, gage with nitrogen and the pressure was released. This pressurization process was repeated two additional times to ensure that the reactor was air-free.

The reactor contents were then heated to 125°C and 0.1 bar, gage of nitrogen pressure were established in the reactor.

Ethylene oxide (EO) was fed to the reactor gradually while the temperature of the liquid phase was maintained at 125°C. An amount of 74.9 kg of ethylene oxide was fed to the reaction in a period of 300 minutes.

The reaction mixture was post-reacted at 125 to 130°C until the pressure had decreased to a stable value indicating that all of the EO had reacted. The reaction mixture was then cooled to 90°C and 0.63 kg of 88% aqueous lactic acid was added to neutralize the residual alkalinity of the polyol. The neutralized mixture was then heated back up to 110°C and vacuum was applied to the vapor space of the reactor to remove moisture from the product. An amount of IRGANOX corresponding to 500 ppm in the product was then added. The mixture was then mixed thoroughly and cooled. The product was discharged from the reactor while being held under a nitrogen blanket.

The polyether product was a clear liquid with a uniform appearance. The properties of the product determined by analysis were:

| | |
|---|---|
| Hydroxyl Number, (mg KOH/gm) | 207 |
| Viscosity at 25°C, mPa-sec | 144 |
| Color, Gardner | 2 |
| pH (isopropanol / water) | 8 |
| MW distribution, Polydispersity | 1.15 |
| Mw Average via GPC | 625 |
| Peak Mw via GPC | 748 |

By theoretical calculation, the mean hydroxyl functionality of this polyether was estimated to be: 2.1 By theoretical mass balance this base polyol was determined to have a renewables content of 57%.

### Example 3

A 5-gallon laboratory reactor constructed of stainless steel was used to carry out the following procedure to make a polyol containing a high content of soybean oil.

3626 grams of GLY STARTER and 8000 grams of SOYBEAN OIL were charged at room temperature to a stainless steel pressure-rated alkoxylation reactor under a "nitrogen sweep" through the vapor space.

The reactor was then closed and pressurized to 1 bar, gage with nitrogen and the pressure was released. This pressurization process was repeated two additional times to ensure that the reactor was air-free.

The reactor contents were then heated to 115°C.

A total of 4200 gms of propylene oxide (PO) were gradually fed into the reactor over a period of approximately 240 minutes.

The mixture was then post-reacted at the same temperature until the pressure no longer changed. The reactor temperature was then raised to 125°C and 5 psi of nitrogen pressure were added.

Ethylene oxide (EO) was fed to the reactor gradually while the liquid phase of the reactor was maintained at 125°C. An amount of 1800 grams of EO was fed into the reactor over a period of approximately 100 minutes.

Post-reaction of the mixture at 125°C was conducted until the pressure had decreased to a stable value indicating that all of the EO had reacted. The reactor was vacuum stripped at full vacuum and 120 - 130°C.

The reactor contents were then cooled to 90°C and 46 gms of aqueous lactic acid were added to neutralize the residual alkalinity. The neutralized mixture was then heated back up to 110°C and vacuum was applied to the vapor space of the reactor to remove water vapor. An amount of IRGANOX corresponding to 500 ppm in the product was then added. The reactor contents were then mixed thoroughly and then cooled before discharging the product from the reactor.

The polyether product was a clear liquid with a uniform appearance. The renewables content of this polyether was determined by calculation to be: 56%. The properties of the polyether product determined by analysis were:

| | |
|---|---|
| Hydroxyl Number, (mg KOH/gm) | 209 |
| Acid Number, (mg KOH/gm) | 0.006 |
| Water, wt % | 0.014 |
| Color | 200 APHA |
| pH (9/1 methanol / water) | 8.4 |
| Viscosity at 25°C, mPa-sec | 132 |

By theoretical calculation, the mean hydroxyl functionality of this polyether was estimated to be: 2.1.

The analytical results of the polyethers obtained according to Examples 1, 2 and 3 are compared with one another in Table I.

**Table I**

| | Example 1 | Example 2 | Example 3 |
|---|---|---|---|
| Soybean oil content [%] | 37 | 45 | 45 |
| Renewable Content [%] | 63 | 57 | 56 |
| Calculated average hydroxyl functionality | 3.5 | 2.1 | 2.1 |
| OH number found [mg KOH/g] | 392 | 207 | 209 |
| Viscosity @ 25°C, mPa·s | 2588 | 144 | 132 |
| Appearance at room temperature | Clear | Clear | Clear |

### Compatibility of NOPs with Blowing Agents

Table 2 compares the compatibility of several natural oil and conventional polyols with the isomers of pentane and water. In addition to the NOP Polyols produced in Examples 1, 2 and 3, two commercial soy polyols from different sources, a typical polyester polyol and two conventional polyether polyols were evaluated. Mixtures of polyol and a pentane isomer (50:50) were agitated vigorously and examined for separation after several days. Since water is normally used at a much lower level, its mixtures were tested at a 5% level with the various polyols.

**TABLE 2**

| Polyol | c-Pentane | i-Pentane | n-Pentane | Water |
|---|---|---|---|---|
| Example 1 | soluble | soluble | soluble | soluble |
| Example 2 | soluble | soluble | soluble | separates |
| Example 3 | soluble | soluble | soluble | separates |
| Commercial Soy Polyol I^{a} | soluble | soluble | soluble | emulsion |
| Commercial Soy Polyol II^{b} | soluble | separates | separates | emulsion |
| Polyester Polyol^{c} | separates | separates | separates | soluble |
| Sucrose Polyether Polyol^{d} | separates | separates | separates | soluble |
| Glycerine Polyether Polyol^{e} | soluble | separates | separates | soluble |

| | | | | |
|---|---|---|---|---|
| ^{a} Soyol R3-170, a three functional polyol with a hydroxyl number of 170 made from soybean oil, available from Urethane Soy Systems Company. ^{b} Agrol 3.5, a soybean based polyol available from BioBased Technologies. ^{c} Stepanpol PS 2352, a difunctional aromatic polyester polyol with a hydroxyl number of 240 mg KOH/g marketed by Stepan Company. ^{d} Multranol 4030, a Sucrose/PG initiated polyether polyol with a 380 hydroxyl number available from Bayer Material Science, LLC. ^{e} Arcol LHT-240, a glycerine initated polyol with a 240 hydroxyl number available from Bayer Material Science, LLC. | | | | |

These results demonstrate that the NOP polyols from Examples 1, 2, and 3 along with Commercial Soy Polyol I have excellent solubility with the pentane isomers, while Commercial Soy Polyol II, the polyester polyol, and the polyether polyols have limited solubility with the pentane isomers. With water, only the NOP produced in Example 1, the polyester polyol and the polyether polyols were soluble. The NOPs produced in Examples 2 and 3 and the commercial soy polyols showed incompatibility with water, but in different ways. The NOPs formed two separate layers with water while the commercial soy polyols formed stable emulsions.

### EXAMPLES 4-9

The following materials were used to prepare the polyol compositions described in TABLE 3.

| | |
|---|---|
| POLYOL X: | A sucrose/propylene glycol co-initiated polyol propoxylated to a hydroxyl number of about 400 mg KOH/g. |
| POLYOL Y: | An o-TDA initiated polyols with a hydroxyl number of about 360 available from Bayer MaterialScience LLC under the name Multranol 8120. |
| POLYOL Z: | A sucrose initiated polyol with a hydroxyl number of about 340 available from Bayer MaterialScience LLC under the name Multranol 9171. |
| SURF: | A silicon surfactant available from Goldschmidt Chemical Corporation under the name Tegostab B-8485. |
| CAT A: | A tertiary amine catalyst (dimethyl cyclohexylamine) available from Air Products and Chemicals under the name Polycat 8. |
| CAT B: | A tertiary amine catalyst available from Air Products and Chemicals under the name Polycat 5. |

Polyol blends which include a pentane isomer are described in TABLE 3. It can be seen from Examples 4-6 that n-pentane and isopentane are not soluble in conventional polyols but are stable for 3 months when the NOP of Example 1 is used in an amount within the scope of the present invention.

**Table 3**

| Example | 4 | 5 | 6 | 7 | 8 | 9 |
|---|---|---|---|---|---|---|
| POLYOL X (pbw) | 41.2 0 | 41.20 | 41.20 | | | |
| POLYOL of Example 1 (pbw) | - | - | - | 41.20 | 41.20 | 41.20 |
| POLYOL Y (pbw) | 16.47 | 16.47 | 16.47 | 16.47 | 16.47 | 16.47 |
| POLYOL Z (pbw) | 24.72 | 24.72 | 24.72 | 24.72 | 24.72 | 24.72 |
| SURF (pbw) | 1.97 | 1.97 | 1.97 | 1.97 | 1.97 | 1.97 |
| CAT A (pbw) | 1.20 | 1.20 | 1.20 | 1.20 | 1.20 | 1.20 |
| CAT B (pbw) | 0.60 | 0.60 | 0.60 | 0.60 | 0.60 | 0.60 |
| Water (pbw) | 1.81 | 1.81 | 1.81 | 1.81 | 1.81 | 1.81 |
| Cyclopentane (pbw) | 12.03 | - | - | 12.03 | - | - |
| Isopentane (pbw) | - | 12.03 | - | - | 12.03 | - |
| n-pentane (pbw) | - | - | 12.03 | - | - | 12.03 |
| Appearance | stable | separates | separates | stable | stable | stable |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A storage stable polyol composition comprising:
a) at least 25% by weight of a polyol derived from a natural oil, based on the total amount of polyol present, and
b) a blowing agent composition comprising greater than 50% by weight of n-pentane, based on total weight of blowing agent composition
in which n-pentane is present in an amount of at least 2% by weight, based on total weight of the polyol composition.

2. The composition of Claim 1 in which the polyol derived from a natural oil is derived from soybean oil, safflower oil, linseed oil, corn oil, sunflower oil, olive oil, castor oil, canola oil, sesame oil, cottonseed oil, palm oil, rapeseed oil, tung oil, fish oil, or a blend of any of these oils.

3. The composition of Claim 1 in which b) comprises greater than 65% by weight of n-pentane.

4. The composition of Claim 1 in which b) comprises greater than 80% by weight of n-pentane.

5. The composition of Claim 1 in which a) is included in an amount of at least 37% by weight, based on total weight of polyol.

6. The composition of Claim 1 in which a) is included in an amount of at least 50% by weight, based on total weight of polyol.

7. The composition of Claim 1 in which the polyol derived from a natural oil has an equivalent weight of from about 80 to about 2000 and a mean hydroxyl functionality of from about 2 to about 5.

8. The composition of Claim 1 in which the polyol derived from a natural oil has an equivalent weight of from about 140 to about 280 and a mean hydroxyl functionality of from about 2 to about 5.

9. The composition of Claim 1 in which the polyol derived from a natural oil is the product of simultaneous transesterification and alkoxylation of a natural oil with other hydroxyl containing products in the presence of ethylene and/or propylene oxide.

10. The composition of Claim 1 in which the polyol derived from a natural oil is derived from soybean oil.

11. The composition of Claim 9 in which the polyol derived from a natural oil is derived from soybean oil.
